# EUROPEAN PATENT APPLICATION

(11) **EP 3 789 348 A1**
(43) Date of publication of application: **10.03.2021**
(21) Application number: 19195343.9
(22) Date of filing: 04.09.2019
(51) Int. Cl.: C02F 1/28, C02F 3/10, C02F 101/34, C02F 101/30

(54) **WATER PURIFYING AGENT AND METHOD FOR MAKING IT**

(71) Applicant: Chin, Wen-Lung, Taoyuan City (TW); Lin, Chih-Chieh, Taoyuan City (TW)
(72) Inventor: Chin, Wen-Lung, Taoyuan City (TW); Lin, Chih-Chieh, Taoyuan City (TW)
(74) Representative: Patentanwälte Hosenthien-Held und Dr. Held

(57) **Abstract**

A method includes preparing a natural seashell, calcining the seashell at a high temperature to clear organic substances from the seashell, processing and reacting the seashell at a high temperature, and grinding and screening the seashell, to form a water purifying agent. The water purifying agent includes a powder having a porous structure. The powder has an interior provided with a plurality of pores. Thus, the water purifying agent is used individually or served as a carrier of a microorganism for a specified purpose, so as to purify the water quality. In addition, the water purifying agent has a high specific surface area and has a good adsorption capacity.

## Description

The present invention relates to a water purifying technology and, more particularly, to a water purifying agent and the method for making it.

A conventional water purifying method comprises directly discharging water from the entire water area (such as the pond or the like) and then injecting clean water into the water area. However, such a method wastes the water source and easily breaks the ecosystem of the water area. Another conventional water purifying method comprises using a chemical agent, such as chlorine or the like, to sterilize and disinfect the water area. However, the chlorine is toxic and easily endangers the human health. In addition, the chlorine is not environmentally friendly, and easily causes a pollution. Another conventional water purifying method comprises using an ultraviolet device to irradiate the water area for a sterilizing purpose. However, the ultraviolet lamp has a determined longevity, has a high cost of replacement, and increases the electricity cost. Another conventional water purifying method comprises blowing air into the water area for an aerating purpose. However, such a method needs to use an energy source, thereby increasing the cost.

The primary objective of the present invention is to provide a water purifying agent which has a high specific surface area and has a better adsorption capacity, such that the water purifying agent is served as an adsorbent with a specified requirement.

In accordance with the present invention, there is provided a method for making a water purifying agent, comprising preparing a natural seashell, calcining the seashell at a high temperature to clear organic substances from the seashell, processing and reacting the seashell at a high temperature, and grinding and screening the seashell, to form a water purifying agent with a porous structure. The water purifying agent is used individually or served as a carrier of a microorganism for a specified purpose, so as to purify a water quality.

In accordance with the present invention, there is also provided a water purifying agent comprising a powder having a porous structure. The powder has an interior provided with a plurality of pores. The powder is made of a natural seashell which is processed at a high temperature, and is ground and screened to form the porous structure. The powder is used individually or served as a carrier of a microorganism for a specified purpose, so as to purify a water quality.

Further benefits and advantages of the present invention will become apparent after a careful reading of the detailed description with appropriate reference to the accompanying drawings.

In the drawings:
FIG. 1 is a flow chart of a method for making a water purifying agent in accordance with the preferred embodiment of the present invention.
FIG. 2 is a schematic enlarged view of a water purifying agent in accordance with the preferred embodiment of the present invention.

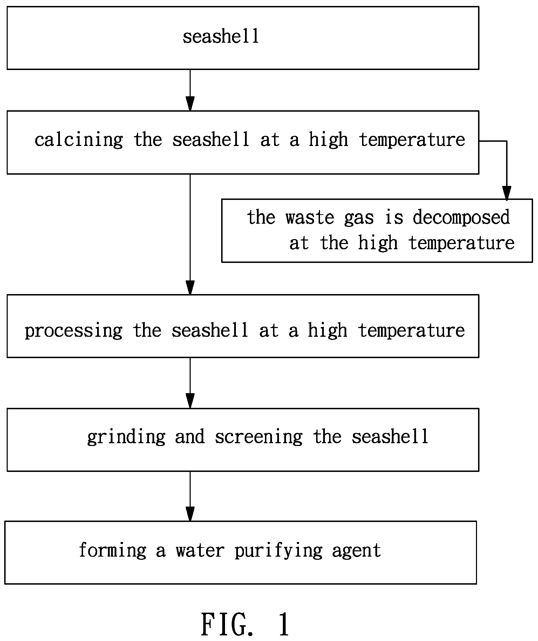

Referring to the drawings and initially to FIG. 1, a method for making a water purifying agent in accordance with the preferred embodiment of the present invention comprises preparing a natural seashell, calcining the seashell at a high temperature to clear organic substances from the seashell, processing and reacting the seashell at a high temperature, and grinding and screening the seashell, to form a water purifying agent with a porous structure. The water purifying agent is used individually or served as a carrier of a microorganism (or microbe or animalcule) for a specified purpose, so as to purify a water quality. A waste gas is produced after the seashell is calcined at the high temperature to clear organic substances. The waste gas is decomposed at the high temperature and is drained out when reaching the emission standard.

In the preferred embodiment of the present invention, the seashell is the shell of a shellfish, an oyster, a clam, a scallop or the like.

In the preferred embodiment of the present invention, the seashell is calcined at the temperature of 800-1200 ° C.

In the preferred embodiment of the present invention, the organic substances include flesh, membrane, gel or the like, that is remains in the seashell.

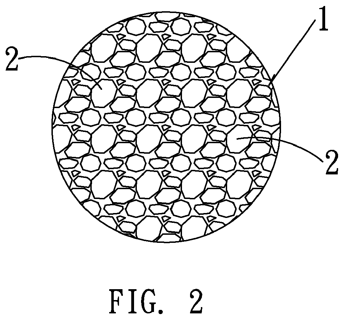

Referring to FIG. 2, a water purifying agent in accordance with the preferred embodiment of the present invention comprises a powder 1 having a porous structure. The powder 1 has an interior provided with a plurality of pores 2. The powder 1 is made of a natural seashell which is processed at a high temperature, and is ground and screened to form the porous structure. The powder 1 is used individually or served as a carrier (such as a breeding house or the like) of a microorganism for a specified purpose, so as to purify a water quality.

In the preferred embodiment of the present invention, the powder 1 has a diameter of 0.4-10 *µ*m.

In the preferred embodiment of the present invention, the water purifying agent has a high specific surface area and has a better adsorption capacity, such that the water purifying agent is served as an adsorbent with a specified requirement. In addition, the water purifying agent is produced without using an energy. Further, the water purifying agent is made of the natural seashell without causing a chemical pollution. Thus, the water purifying agent is used individually or served as a carrier of a microorganism for a specified purpose, so as to purify a water quality.

In the preferred embodiment of the present invention, the water purifying agent includes natural alkaline biological calcium with a PH value greater than ten (PH>10), so as to neutralize the acid ecological water.

Accordingly, the water purifying agent improves the TDS (total dissolved solids) in the environmental water. The TDS means the total amount of solid substances (including soluble hydrogen carbonate ions, chloride, sulfate, calcium, magnesium, sodium and potassium, volatile and non-volatile solids) that are dissolved in the water. In addition, the water purifying agent also decreases the SS (suspended solids) in the environmental water. The SS means the total amount of organic or inorganic particles that are suspended in the water due to agitation or flow. These particles generally contain colloidal (or gum) suspensions, dispersions, and floe. The suspended solids hinder penetration of light in the water. If the suspended solids are deposited in the riverbed, they will hinder the water flow. If the suspended solids are deposited in the reservoir area, they will reduce the water storage space of the reservoir. Further, the water purifying agent also decreases the COD (chemical oxygen demand) in the environmental water. The COD means the total amount of organic substances that are chemically oxidized in the water. In general, the COD indicates the polluted extent of the industrial wastewater or the wastewater that is not decomposed biologically by the microbes. Further, the water purifying agent also decreases the TNC (total number of colony) in the environmental water. The TNC means the total number of viable bacteria contained in the water sample. Further, the water purifying agent also decreases the turbidity in the environmental water. The source of turbidity includes adhesive particles, cosmids, granules, fine organic matter, plankton or microorganisms. Further, the water purifying agent also increases the SD (transparency) in the environmental water. The SD means the extent to which light can penetrate water. Further, the water purifying agent also decreases the CHL-a (chlorophyll-a) in the environmental water. When the CHL-a is high in the water, the high value means that the algae in the water are overgrown.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention.

## Claims

1. A method for making a water purifying agent, comprising:
preparing a natural seashell;
calcining the seashell at a high temperature to clear organic substances from the seashell;
processing and reacting the seashell at a high temperature; and
grinding and screening the seashell, to form a water purifying agent with a porous structure;
wherein the water purifying agent is used individually or served as a carrier of a microorganism for a specified purpose, so as to purify a water quality.

2. A water purifying agent comprising:
a powder (1) having a porous structure;
wherein:
the powder has an interior provided with a plurality of pores (2);
the powder is made of a natural seashell which is processed at a high temperature, and is ground and screened to form the porous structure; and
the powder is used individually or served as a carrier of a microorganism for a specified purpose, so as to purify a water quality.

3. The water purifying agent of claim 2, wherein the powder has a diameter of 0.4-10 *µ*m.
